Europäisches Patentamt

European Patent Office

Office européen des brevets

(19)

(11) Numéro de publication : **0 196 972**
**B1**

(12) **FASCICULE DE BREVET EUROPÉEN**

(45) Date de publication du fascicule du brevet :
11.10.89

(21) Numéro de dépôt : 86400658.0

(22) Date de dépôt : 27.03.86

(51) Int. Cl.⁴ : **B 29 B 9/16, C 08 L 77/00,
C 08 K 9/08, C 08 J 3/20** //
B29K77:00, B29K105:16

(54) Particules enrobées de polyamide et leur procédé de préparation.

(30) Priorité : 29.03.85 FR 8504739

(43) Date de publication de la demande :
08.10.86 Bulletin 86/41

(45) Mention de la délivrance du brevet :
11.10.89 Bulletin 89/41

(84) Etats contractants désignés : .
AT BE CH DE FR GB IT LI LU NL SE

(56) Documents cités :
DE--A-- 2 801 990
US--A-- 3 386 943
US--A-- 4 065 519
US--A-- 4 214 065

(73) Titulaire : **ATOCHEM**
**4 & 8, Cours Michelet La Défense 10**
**F-92800 Puteaux (FR)**

(72) Inventeur : **Ganga, Roland**
**42bis, Ile sanac**
**F-94340 Joinville-le-Pont (FR)**
Inventeur : **Grossoleil, Jacques**
**Rue d'Orc**
**F-27800 Brionne (FR)**
Inventeur : **Merval, Jean-Paul**
**3, Rue de Valleville**
**F-27800 Brionne (FR)**

(74) Mandataire : **Rochet, Michel et al**
**ATOCHEM Département Propriété Industrielle La**
**Défense 10 4 & 8 Cours Michelet**
**F-92800 Puteaux (FR)**

Jouve, 18, rue St-Denis, 75001 Paris, France

## Description

Les polyamides possédant, entre autres propriétés intéressantes, de remarquables propriétés mécaniques, une bonne inertie vis-à-vis de beaucoup d'agents chimiques et une excellente adhérence sur de nombreux matériaux, on a déjà tenté d'enrober des particules de matériaux divers d'une couche de polyamide pour les munir d'une enveloppe qui servira, soit, à les protéger, soit, à les lier avec d'autres matériaux, par fusion et refroidissement.

Malheureusement, réaliser un tel enrobage n'est pas chose aisée.

On peut, par exemple, malaxer dans une extrudeuse les particules de substrat avec le polyamide fondu, extruder des joncs de ce mélange, les refroidir, les couper en granulés et réduire ensuite ces granulés en poudre par broyage cryogénique.

Mais une telle méthode présente beaucoup d'inconvénients parmi lesquels nous citons les suivants :

— pour que le mélange polyamide-substrat ait un bon comportement thermoplastique lors de son passage en extrudeuse, il faut qu'il ait une teneur élevée en polyamide ce qui conduit à un enrobage épais, et, du reste, irrégulier des particules finales,

— lors du broyage, beaucoup de particules sont mises à nu,

— les particules ne devant pas fondre ni réagir avec le polyamide lors du passage en extrudeuse, ceci en limite le choix.

De même que l'on a proposé de revêtir des fils de cuivre d'une mince couche de polyamide par passage de ces fils dans une solution chaude de polyamide dans un crésol et séchage ultérieur (brevet US 4 216 263), on pourrait malaxer les particules à enrober dans de telles solutions et les sécher - mais, les crésols (qui sont à peu près les seuls solvants efficaces des polyamides) sont des corps dangereux et difficiles à éliminer - de plus, les particules colleraient entre elles.

Pour remédier à ceci, le brevet français 2 258 263 propose de malaxer les particules avec des solutions dans l'alcool méthylique ou autres solvants (faciles à manipuler et aisément éliminables, par la suite, par séchage) non pas de polyamides (qui y seraient insolubles) mais de copolyamides.

Le brevet US 4 065 519 enseigne un type de malaxage similaire ; les particules à enrober sont indifféremment mélangées avec des homopolymères ou avec des copolymères de polyamide au sein d'un solvant adéquat.

Ce procédé est simple - malheureusement, on obtient des particules enrobées de copolyamides qui n'ont pas les mêmes propriétés que les polyamides purs - (plus grande absorption d'eau, moins bonne résistance aux agents chimiques etc...) ce qui peut être gênant pour certaines applications - de plus, l'enrobage n'est pas régulier.

Le procédé qui fait l'objet de la présente invention permet de résoudre le problème posé sans présenter les inconvénients mentionnés ci-dessus. Il permet d'obtenir des particules enrobées d'une couche régulière de polyamide qui n'avaient jamais pu être obtenues autrement.

Ce procédé consiste essentiellement à :

— mettre les particules du substrat que l'on veut enrober en suspension dans un milieu réactionnel susceptible de générer un polyamide ou copolyamide par polymérisation anionique en solution, c'est-à-dire un milieu comprenant essentiellement un lactame, un solvant de ce lactame et un catalyseur anionique

— déclencher la polymérisation anionique par addition d'un activateur

— isoler, une fois la polymérisation terminée, les particules de substrat sur lesquelles est venu se déposer le polyamide au fur et à mesure de sa formation.

De tels milieux réactionnels ont été décrits dans les brevets Français n° 1.521.130 et 1.601.194, et la DE OS 1 942 046.

Tout lactame générateur de polyamide peut être en œuvre dans l'invention ; citons plus particulièrement ceux qui ont acquis une importance industrielle : le caprolactame, l'oenantholactame, le capryllactame et le lauryllactame.

On peut également mettre en oeuvre un mélange de deux ou plusieurs lactames ce qui conduit à un enrobage du substrat par une couche de copolyamide.

Le solvant utilisé a un point d'ébullition compris entre 80 et 200 °C ; ce peut être un hydrocarbure aliphatique, de type paraffinique, par exemple, ou cyclanique ou aromatique (tel que xylène ou toluène), halogéné ou non.

Il est indispensable que ce solvant :

— dissolve le lactame mais pas le substrat

— ne réagisse avec aucun des composés mis en oeuvre dans le procédé : catalyseur, activateur, lactame, substrat.

Le catalyseur peut être le sodium ou un de ses composés comme l'hydrure de sodium ou le méthylate de sodium.

L'activateur peut être un lactame-N-carboxyanylide, un isocyanate, une carbo di-imide, une cyanimide, un acyl-lactame, une triazine, une urée, une imide-N-substituée, un ester, etc...

On peut, éventuellement, régulariser la réaction de polymérisation en introduisant dans le milieu une N,N'-alkylène bis amide.

Il ne faut introduire dans le milieu aucune particule autre que celle du substrat que l'on veut encapsuler.

Le substrat peut être de nature très diverse :

— minérale (billes de verre, fibres de verre, grains de feldspath, de carbonate de calcium, de magnésie, poudre de fer etc...)

— ou, organique (fibres de carbone, grains de polymères tels que polychlorure de vinyle, polybutadiène, polyéthylène, polystyrène réticulé, dérivés cellulosiques... noir de carbone etc...).

Le substrat n'a pas besoin d'avoir une forme régulière, sa surface peut être lisse ou pleine d'aspérités.

Aucune densité spéciale n'est requise du moment que l'on arrive à le maintenir en suspension dans le milieu réactionnel grâce à l'agitation que l'on y entretient ; c'est ainsi que l'on peut enrober, sans difficultés, des poudres de cuivre ou de nickel pourtant très denses.

L'essentiel est qu'il soit solide, insoluble dans le milieu réactionnel et inerte vis-à-vis de ce milieu ; en particulier, il ne doit apporter aucune trace d'eau.

C'est ainsi que lorsque l'on veut enrober des billes de verre ou des fibres de verre qui sont la plupart du temps déjà enrobées d'un ensimage, il est indispensable de s'assurer par des analyses ou essais préalables que cet ensimage ne nuit pas à la réaction.

Comme on le verra dans l'exemple 5 ci-dessous, on peut enrober des particules de matières qui ne sont pas complètement inertes vis-à-vis du catalyseur. Il suffira d'introduire ces particules dans le milieu au moment où il ne contiendra plus de catalyseur, c'est-à-dire après que le catalyseur aura réagi avec le lactame pour le transformer en lactamate.

Dans les exemples que nous citons ci-dessous, exemples qui ont pour but d'illustrer l'invention sans toutefois la limiter, les essais ont été réalisés dans un réacteur d'une capacité de 20 litres, muni d'un agitateur à pales, d'une double enveloppe dans laquelle circule de l'huile de chauffage, d'un système de vidange par le fond et d'un sas d'introduction des réactifs balayé à l'azote sec.

Un dispositif de distillation azéotropique sous vide permet d'éliminer toute trace d'eau du milieu réactionnel.

Le solvant utilisé est une coupe d'hydrocarbure paraffinique dont la plage d'ébullition se trouve entre 130 et 160 °C.

Le poids moléculaire de la couche de polyamide déposé est déterminé par mesure de la viscosité inhérente, à 25 °C, d'une solution de 0,5 g de cette couche dans 100 g de m-crésol.

## Exemple 1

Enrobage de billes de verre pleines

Les billes utilisées commercialisées, par la Société MICROBEADS AG sous la référence PF 11 R ont une densité de 2,45 et un diamètre moyen de 26 microns.

Leur surface a été traitée avec un agent de pontage de type « Silane » qui, comme on l'a vérifié par un essai préalable, est inerte vis-à-vis du milieu réactionnel et ne nuit pas ainsi au dépôt de polyamide.

On introduit successivement dans le réacteur, sous azote, à la température ordinaire, et, sous faible agitation :
— 10 litres de solvant,
— 1 500 grammes de billes de verre PF 11 R
— 1 500 grammes de caprolactame.

On porte la température du bain à 110 °C, température que l'on maintient pendant 60 minutes sous une vitesse d'agitation de 360 tours/minute de manière que tout le caprolactame se dissolve, distille 100 cc de solvant afin d'éliminer azéotropiquement l'eau qui pourrait être présente, revient à la pression atmosphérique, introduit 28,67 grammes d'hydrure de sodium à 50 % de pureté, porte à 130 °C, et, la vitesse d'agitation étant toujours maintenue à 360 tours/minute, introduit en 4 heures, à vitesse linéaire, une solution de 82 grammes d'isocyanate de stéaryle dans 1,9 litres de solvant.

Une fois cette injection terminée, on maintient la température de 130 °C pendant encore 30 minutes, refroidit à 100 °C, arrête l'agitation, vidange le contenu du réacteur dans un filtre pour séparer le solvant, sèche à 90 °C et sous vide la poudre obtenue, la traite par 1 500 cc d'une solution aqueuse d'acide phosphorique à 3 % de manière à neutraliser les restes alcalins provenant du catalyseur et la sèche à nouveau.

Comme le montre la photo ci-jointe prise au microscope optique, cette poudre est constituée des microbilles de verre introduites, enrobées d'une couche très uniforme et très régulière de 3 à 5 microns d'épaisseur de polyamide 6.

Par ailleurs, la viscosité inhérente de cette couche de polyamide a été trouvée égale à 0,82.

## Exemple 1 Bis

On reprend l'exemple 1 mais en introduisant 300 g de billes de verre et 1 500 g de caprolactame, ce qui entraîne la mise en œuvre de 20 grammes d'hydrure de sodium et 82 cc d'isocyanate de stéaryle.

Le rapport Polyamide/Billes de verre étant plus élevé que dans l'exemple précédent, les billes de verre sont enrobées à la fin d'une couche plus épaisse de polyamide : 6 à 8 microns au lieu de 3 à 5. La viscosité de cette couche a la valeur 0,71.

## Exemple 2

Enrobage de billes de verre creuses

Les billes utilisées sont des billes de verre creuses vendues par la Société MICROBEADS AG sous la référence GL, non ensimées, de diamètre moyen 47 microns et de densité égale à 0,35.

On opère comme dans l'exemple 1 ci-dessus mais avec
— 300 grammes de ces billes creuses
— 2 700 grammes de caprolactame
— 25,2 grammes d'hydrure de sodium à 50 %
— 122,94 grammes d'isocyanate de stéaryle.

Les billes qui flottaient à la surface du bain s'y dispersent dès que l'on établit l'agitation à 360 tours/minute.

On obtient, en fin d'opération, des microbilles recouvertes d'une couche très uniforme et régulière, d'épaisseur 6 microns, de polyamide 6 de viscosité inhérente égale à 0,75.

## Exemple 2 Bis

Les billes creuses ont, cette fois-ci, un diamètre de 70 microns. Les conditions opératoires restent les mêmes à la différence près que l'on utilise 22,9 grammes d'hydrure.

La couche de polyamide 6 finale a une épaisseur de 6 microns et une viscosité égale à 0,80.

Exemple 3

Enrobage de fibres de verre

Même mode opératoire que pour les exemples précédents mais en chargeant l'autoclave de 500 grammes de fibres de verre livrées par la Société VETROTEX SAINT-GOBAIN sous l'appellation VETROTEX EC 10 N 99 de diamètre à peu près égal à 10 microns et de longueur comprise entre 30 et 250 microns.

A cette fibre de verre, on ajoute 2 700 grammes de caprolactame et 25,2 g d'hydrure de sodium à 50 % puis polymérisé par addition de 122,94 grammes d'isocyanate de stéaryle.

Une fois l'opération terminée, on obtient des fibres de verre enrobées, sur toute leur longueur et aux extrémités, d'une couche de polyamide 6 de 5 microns d'épaisseur.

Exemple 4

Enrobage de particules d'oxyde de fer magnétique broyé, de diamètre compris entre 10 et 30 microns.

On introduit dans un réacteur de 5 litres,
— 2,840 litres de solvant
puis, successivement,
— 80 g de lauryllactame,
— 1 069 g d'oxyde de fer
— 1 g de N,N'-éthylène bis stéaramide.

On règle l'agitation à 350 t/min. et porte la température du bain à 110 °C.

Après distillation azéotropique de 500 cc. de solvant sous un vide de 200 torrs, on introduit sous azote 3,0 g d'hydrure de sodium à 80 % de pureté. On maintient 30 minutes à 110 °C, refroidit à 100 °C et, à cette température, effectue l'injection de 8,5 g d'isocyanate de stéaryle en 2 heures. Une fois l'injection terminée, la température est remontée à 110 °C pendant 1 heure.

Après refroidissement, décantation et séchage, on obtient une poudre homogène de granulométrie comprise entre 12 et 35 microns.

Tous les grains d'oxyde ont été enrobés d'une couche de polyamide 12, de viscosité inhérente égale à 0,81.

Exemple 5

Enrobage de particules de PVC (Polychlorure de Vinyle)

Il s'agit de particules de PVC obtenues par le procédé dit « en suspension », parfaitement séchées avant leur mise en oeuvre, et de diamètre moyen de 20 microns.

Pour les enrober de polyamide 12, on utilise à nouveau le réacteur qui a servi dans les exemples 1 à 3.

Ayant constaté par des essais préalables, que ces particules n'étaient pas totalement inertes vis-à-vis de l'hydrure de sodium, on ne les introduit qu'après réaction de l'hydrure avec le lactame, ce qui donne du lactamate de sodium.

Le mode opératoire est alors le suivant :
ayant chargé le réacteur de :
— 10 litres de solvant,
— 88,3 g de N,N'-éthylène bis stéaramide
— 2.850 g de lauryllactame,
effectué la dissolution à 105 °C sous agitation, distillé 100 cc de solvant, introduit 13,88 g d'hydrure de sodium à 50 % de pureté, on introduit sous azote 150 g de PVC et, en maintenant la température du milieu à 105 °C et l'agitation à 360 tours/minute, introduit, en 4 heures, une solution de 89,3 g d'isocyanate de stéaryle dans 2 litres de solvant.

Après lavage et séchage comme dans l'exemple 1, on obtient finalement une poudre constituée par des grains de PVC enrobés d'une couche parfaitement uniforme de polyamide 12, de viscosité inhérente égale à 0,62. Les grains de PVC qui, initialement, n'étaient pas sphériques, le sont devenus - leur diamètre moyen est passé de 20 à 26 microns.

Exemple 5 Bis

En opérant de manière analogue, mais, sans utilisation de N,N'-éthylène bis stéaramide et avec 300 g de PVC, 2.700 de lauryllactame, 9,86 d'hydrure et 94 d'isocyanate, on obtient des grains de PVC enrobés de 40 microns de diamètre - la viscosité de la couche de polyamide 12 est de 1,77.

Les utilisations des substrats ainsi enrobés sont diverses :

1. Les billes de verre pleines de l'exemple 1 et les fibres de verre de l'exemple 3 peuvent servir à renforcer des matériaux composites. Lors de la fabrication de ces matériaux, il suffira de les porter à une température légèrement supérieure à celle du point de fusion du polyamide constituant l'enrobage et de refroidir pour créer un bon accrochage entre les billes ou les fibres de verre et les matériaux avec lesquels ils sont en contact.

2. Avec la poudre d'oxyde de fer enrobé de polyamide de l'exemple 4, on peut facilement fabriquer des aimants permanents de forme voulue en comprimant cette poudre dans un moule, portant la pièce quelques minutes à 185 °C de manière à obtenir la fusion totale du polyamide et en laissant refroidir.

Dans cet ordre d'idées, une application originale qui fait également l'objet de la présente invention, consiste à utiliser des poudres métalliques enrobées de polyamide aux lieu et place de poudres de polyamides purs dans la fabrication des matières composites souples revendiqués par la demande de brevet français n° 84.05627, au nom de la demanderesse, dont le contenu s'ajoute à la présente description.

C'est ainsi que des poudres de cuivre de 3 à 5 microns de diamètre, de 13 microns après enrobage par une couche de polyamide 12, des poudres de nickel de 12 microns de diamètre, de 25 microns après enrobage, peuvent entrer jusqu'à 35 pour cent en poids dans la confection des composites souples cités ci-dessus, permettant après transformation de ceux-ci en plaques par assemblage, fusion et refroidissement, d'obtenir des matériaux constitués essentiellement de polyamide, de fibres de verre et de graisses métalliques répartis uniformément ce qui leur confère des propriétés électriques ou électromagnétiques intéressantes.

3. Les poudres de PVC enrobées de polyamide 12 des exemples 5 et 5 bis peuvent être utilisées dans les cosmétiques pour remplacer avantageusement le talc.

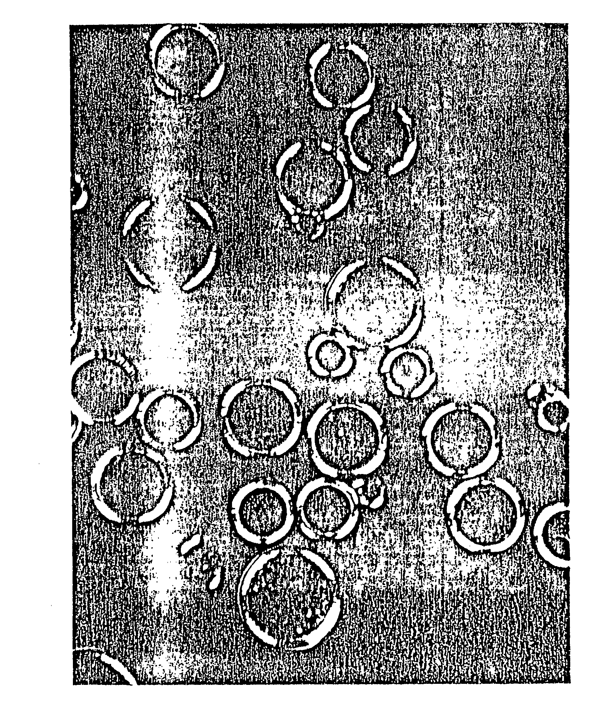

## Revendications

1. Particules solides enrobées sur toute leur surface d'une couche régulière d'un polyamide, caractérisées en ce que ledit polyamide est généré par polymérisation anionique d'un lactame directement sur les particules solides, et en ce que le substrat constituant lesdites particules est inerte vis-à-vis du milieu de polymérisation.

2. Particules selon la revendication 1 caractérisées en ce qu'elles sont choisies dans le groupe comprenant les billes de verre, pleines ou creuses, les portions de fibres de verre, les poudres d'oxyde de fer magnétique, les poudres métalliques et les poudres de polychlorure de vinyle.

3. Procédé de fabrication des particules suivant l'une quelconque des revendications 1 et 2 caractérisé en ce qu'il comprend les étapes suivantes :

— les particules sont mises en suspension dans un milieu générateur de polyamide constitué par un lactame, un solvant de ce lactame et un catalyseur de polymérisation anionique,

— la polymérisation anionique du lactame est déclenchée par addition d'un activateur,

— les particules enrobées sont isolées, lavées et séchées.

4. Utilisation des particules selon l'une quelconque des revendications 1 et 2 à la fabrication de matériaux composites.

## Claims

1. Solid particles coated over their entire surface with a uniform layer of a polyamide, characterized in that the said polyamide is produced by anionic polymerization of a lactam directly onto the solid particles, and in that the substrate constituting the said particles is inert towards the polymerization medium.

2. Particles according to Claim 1, characterized in that they are chosen from the group comprising solid or hollow glass beads, portions of glass fibres, magnetic iron oxide powders, metal powders and polyvinyl chloride powders.

3. Process for the manufacture of particles according to either of Claims 1 and 2, characterized in that it comprises the following stages :

— the particles are suspended in a polyamide-producing medium consisting of a lactam, a solvent for this lactam and an anionic polymerization catalyst,

— the anionic polymerization of the lactam is triggered by adding an activator,

— the coated particles are isolated, washed and dried.

4. Use of the particles according to either of Claims 1 and 2 for the manufacture of composite materials.

## Patentansprüche

1. Feste Partikel, die über ihre ganze Oberfläche mit einer regelmäßigen Schicht eines Polyamids umhüllt sind, dadurch gekennzeichnet, daß dieses Polyamid durch anionische Polymerisation eines Lactams direkt auf den festen Partikeln erzeugt wird, und daß das diese Partikel bildende Substrat gegenüber dem Polymerisationsmilieu inert ist.

2. Partikel nach Anspruch 1, dadurch gekennzeichnet, daß sie ausgewählt werden aus der Gruppe umfassend Glaskugeln, Vollkugeln oder Hohlkugeln, Teile von Glasfasern, magnetische Eisenoxidpulver, Metallpulver und Polyvinylchloridpulver.

3. Verfahren zur Herstellung von Partikeln gemäß einem der Ansprüche 1 und 2, dadurch gekennzeichnet, daß es die nachfolgenden Schritte umfaßt :

— Die Partikel werden in einem ein Polyamid erzeugenden Milieu in Suspension gebracht, das aus einem Lactam, einem Lösungsmittel für dieses Lactam und einem anionischen Polymerisations-katalysator besteht,

— die anionische Polymerisation des Lactams wird durch Zugabe eines Aktivators ausgelöst

— die umhüllten Partikel werden isoliert, gewaschen und getrocknet.

4. Verwendung von Partikeln gemäß einem der Ansprüche 1 und 2 zur Herstellung von Verbundstoffen.